(19) Europäisches Patentamt
European Patent Office
Office européen des brevets

(11) **EP 2 254 959 B1**

(12) **EUROPEAN PATENT SPECIFICATION**

(45) Date of publication and mention
of the grant of the patent:
**10.02.2016 Bulletin 2016/06**

(21) Application number: **09713325.0**

(22) Date of filing: **20.02.2009**

(51) Int Cl.:
*C09D 175/04* (2006.01)     *C08G 18/76* (2006.01)
*C08G 18/28* (2006.01)     *C08G 18/48* (2006.01)
*C08G 18/32* (2006.01)     *C03C 17/32* (2006.01)

(86) International application number:
**PCT/IB2009/050704**

(87) International publication number:
**WO 2009/104161 (27.08.2009 Gazette 2009/35)**

(54) **A COATING COMPOSITION FOR STRENGTHENING GLASS**

BESCHICHTUNGSZUSAMMENSETZUNG ZUM STÄRKEN VON GLAS

COMPOSITION DE REVÊTEMENT POUR RENFORCER DU VERRE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **21.02.2008 US 30399 P**

(43) Date of publication of application:
**01.12.2010 Bulletin 2010/48**

(73) Proprietor: **SABMiller International Brands
Limited
Woking, Surrey GU21 6HS (GB)**

(72) Inventors:
• **WEN, Mei
Malvern
Pennsylvania 10355 (US)**
• **HOPKINS, Thomas, R.
Chalfont
Pennsylvania 18914 (US)**

• **BROTZMAN, Jeffery, Richard
Mt. Laurel
New Jersey 08054 (US)**
• **SILVERMAN, Gary, Stephen
Chadds Ford
Pennsylvania 19317 (US)**
• **CARSON, Stephen, William
Coatesville
Pennsylvania 19320 (US)**

(74) Representative: **Smaggasgale, Gillian Helen et al
WP Thompson
55 Drury Lane
London WC2B 5SQ (GB)**

(56) References cited:
**DE-U1- 20 210 251      GB-A- 1 523 660
US-A- 4 053 076      US-A- 4 093 759
US-A- 4 409 266      US-A1- 2005 032 974**

EP 2 254 959 B1

**Description**

THIS invention relates to a method of making a composition for coating glass, to a composition for coating glass, to a method of coating glass and to a coated glass item.

It is an object of the invention to provide a coating to strengthen glass, in particular returnable glass bottles such as beer bottles, thereby reducing both the mass of the glass and the cost of the bottle. This process is generally referred to as the "lightweighting" of bottles.

Prior art coatings known to the applicant include UV-curable acrylate coatings, siloxane coatings, single and multiple polyurethane coatings, epoxy coatings and acrylate coatings. Prior art coatings which have a strengthening effect include polyacrylate coatings as disclosed in US 4891241 and siloxane coatings as disclosed in US 6013333 and US 5567235. The polyacrylate coatings required ultraviolet curing whereas the siloxane coatings were found to be susceptible to a loss of strength in humid environments. The polyurethane coatings of US 4093758, US 4053076, EP 025992 and US 5837795 were used mainly for anti-scattering or anti-shattering coatings for bottles. These coatings were also used as protective coatings to retain the initial strength of the bottle. US 4093759 discloses a high elastic, toluene diisocyanate-based polyurethane coating to prevent scattering of glass fragments in the event of the bursting of glass containers. US 4053076 discloses a method which involves the application of two layers of polyurethane coatings for shatterproofing applications. The coating consists of a soft base coating and a hard top coat. EPA 25992 describes the use of isocyanate prepolymers and a solid melamine to prepare polyurethane coatings for application on silane-treated glass bottles to produce shatterproof bottles. US 5837795 discloses an improved polyurethane coating which achieves a high level of caustic resistance in a short period of time. JP 2002347770 discloses a method of applying a water-based coating solution which contains polyurethane resin, a styrene butadiene rubber and melamine to silane-treated glass bottles. JP 2002059932 A

discloses a method of applying a three layer coating consisting of a silane primer layer, a soft polyurethane middle layer and a hard polyurethane, polyethylene and epoxy resin top layer. These coatings had good scratch resistance and caustic resistance. A two layer coating consisting of an acrylate base coating and a polyurethane topcoat for retaining initial bottles strength is disclosed in International Glass Review, 2002 "Resin coated ultra-light weight returnable bottle".

The coatings of the present invention have a different chemistry and different properties from the coatings and coating systems known in the prior art.

According to a first aspect of the invention there is provided a glass item which has a single layer strengthening coating composition which increases the burst pressure of the item, the coating having a thickness of between 20 and 50 microns, the composition being prepared by combining

a polyol component;

an isocyanate component; and

a silane adhesion promoter, the silane adhesion promoter comprising less than about 15% of the composition.

The silane adhesion promotion may comprise less than about 10% and preferably less than about 6%.

In different embodiments of the invention the silane adhesion promoter may comprise between about 0,7% and about 3% of the composition on a % by weight basis.

The polyol component may be selected from polyether polyols, polyester polyols and polyacrylate polyols. Preferably, the polyol will be a polyether polyol which was found to have a better caustic resistance than polyester polyols and polyacrylate polyols. In particular, the polyol component may be a combination of tri- and tetra-functional polyols. Pluracol TP-440™ was found to be a suitable tri-functional polyol. This substance is a tri-functional polyether polyol formed by adding propylene oxide to a trimethylol propane nucleus. Pluracol PEP-450™ was found to be a suitable tetra-functional polyol. This material has four hydroxyl groups per molecule. The Pluracol range of products is manufactured by BASF.

The isocyanate component may be a polymeric isocyanate or an isocyanate prepolymer. The polymeric isocyanate may come from methylenediphenyldiisocyanate (MDI). Polymeric methylenediphenyldiisocyanates consist of isocyanate-substituted aromatic rings linked by methylene units with a chain length of between about 2 and 6 phenyl units. A preferred polymeric MDI is Rubinate M™ which has average functionality of 2,7. Other polymeric MDIs that can be used include Rubinate 1680™, Rubinate 44™, Rubinate 1245™, Rubinate 9016™, Rubinate 9257™, Rubinate 7500™, Rubinate 1920™, Rubinate 1820™, Rubinate 9258™, Rubinate 9495™, Suprasec 9537 and Suprasec 9584™. The Rubinate and Suprasec range of products are manufactured by Huntsman International LLC.

The silane adhesion promoter may be selected from amino functional silanes, isocyanate functional silanes, mercapto functional silanes, epoxy functional silanes, bis-hydroxyl functional silanes and mixtures thereof.

In particular, the silane adhesion promoter may be selected from 3-aminopropyltriethoxysilane, 3-isocyanatopropyltriethoxysilane, bis(2-hydroxyethyl)-3-aminopropyltriethoxysilane, (3-triethoxysilylpropy)-t-butylcarbamate, triethoxysilylpropylethylcarbamate, 3-mercaptopropyltrimethoxysilane, (3,4-epoxycyclohexyl)ethyltrimethoxysilane, (3-gfycidopropyl)trimethoxysilane, (3-glycidopropyl)triethoxysilane and combinations of any two or more thereof.

The composition may be prepared by combining a polymerising catalyst with the polyol component, the isocyanate component and the silane adhesion promoter. The polymerising catalyst may be a salt of a metal such as tin, zinc, zirconium or bismuth or a compound containing tertiary amino groups. In particular, the polymerising catalyst may be dibutyltin dilaurate.

In addition, the composition may be prepared by combining melamine crosslinking agent and a catalyst for the melamine reaction. The melamine crosslinking agent contains methoxy groups that can react with polyol or isocyanate to form more crosslinks with a catalyst. A preferred melamine crosslinking agent is hexamethoxymethylmelamine such as CYMEL 303. Other melamines that can be used include CYMEL 350. The catalyst is an acid catalyst. Preferred catalyst is CYCAT 4040. Other catalyst of this type includes CYCAT 600. CYMEL 303, CYMEL 350, CYCAT 4040, CYCAT 600 are products of CYTEC Industries Inc.

In addition, the composition may be prepared by combining one or more wetting agents and/or one or more surface slip agents with the polyol component, the isocyanate component and the silane adhesion promoter. The wetting agent may be of the type which reduces the surface tension of coating solutions. Preferred wetting agents of this type comprise solutions of polyether modified polymethylalkylsiloxanes. These materials improve flow and levelling as well as displaying partial defoaming properties. They help the coating solution to wet the substrate and to achieve a uniform, smooth coating. A preferred wetting agent of this type is BYK 325 ™. Other wetting agents that can be used include BYK 315™ (polyester modified polymethylalkylsiloxane), BYK 333™ (polyether modified polydimethylsiloxane), and polyacrylate based BYK 356™, BYK 358™ and BYK 355™. The BYK range of products is manufactured by BYK Additives and Instruments.

A surface slip agent is an agent which increases the surface slip of a coating. The agents are generally silicon compounds that migrate to the coating surface to provide lubricity. Reactive silicon compounds with free hydroxyl functional groups which can react with isocyanates are preferred due to their better stability during caustic wash. An example of such an agent is a solution of a polyester modified hydroxy functional polydimethyl siloxane. A preferred surface slip agent of this type is BYK 370™. Other reactive agents that can be used include BYK 373™ (polyether modified hydroxyl functional polydimethylsiloxane) and BYK 377™ (polyether modified polydimethyl siloxane).

The composition may be prepared by combining the polyol component, the isocyanate component and the silane adhesion component with a solvent. The solvent may be in the form of a mixture of solvents such as esters, ketones, aromatic solvents and the like. In a preferred embodiment of the invention the solvent may be in the form of a mixture of isobutyl acetate, toluene, cellosolve acetate and ethylisoamyl ketone.

The mass ratio between the polyol component and the isocyanate component is determined based on the molar ratio of isocyanate to hydroxyl groups. The molar ratio in the coating composition may be between about 1,3 - 0,9, preferably between about 1,2 - 1,0 and more preferably between about 1,1 - 1,0.

When the polyol component is a combination of triol and tetraol, the mass ratio between the triol and the tetraol may be between about 100:0,5 to 1:1, preferably between about 10:1 to 1:1 and more preferably between about 5:1 to 1:1. The percentage of the solvent in the composition may be between about 0 and 30%, preferably between about 5 and 25% and more preferably between about 10 and 25%. The concentration of the catalyst in the resin may be between about 0 and 1% and is preferably between about 0 and 0,5%. The concentration range of the wetting agent may be between about 0, 01 and 2% of the composition and is preferably between about 0,05 and 0,8%. The concentration range of the surface slip agent in the composition may be between about 0,05 and 7% and is preferably between about 0,1 and 5%.

The composition may, in addition, include one or more of a polymerisation catalyst, a wetting agent and a surface slip agent. The, or each, polymerisation catalyst, the, or each, wetting agent and the, or each, surface slip agent may be as hereinbefore described. The composition may, further, include a solvent as hereinbefore described.

The composition may be a two part coating composition for strengthening glass in a one-coating procedure

the first part comprising

a polyol component; and

the second part comprising

a polyisocyanate component; and

either the first part, or the second part, or both parts, comprising a silane adhesion promoter, in an amount which is selected so that, if the first and second parts are combined to produce the coating composition, the silane adhesion promoter comprises less than about 15% of the composition.

The polyol component, the polyisocyanate component and the silane adhesion promoter may be as hereinbefore described.

The first part may, in addition, include one or more of a polymerisation catalyst, a wetting agent and a surface slip agent. The, or each, polymerisation catalyst, the, or each, wetting agent and the, or each, surface slip agent may be as hereinbefore described. Either the first part or the second part, or both the first part and the second part, may include a solvent as hereinbefore described.

The composition may, in addition, include one or more of a polymerisation catalyst, a wetting agent and a surface slip agent. The, or each, polymerisation catalyst, the, or each, wetting agent and the, or each, surface slip agent may be as hereinbefore described.

The composition may include a solvent as hereinbefore described.

The surface may be the surface of a glass bottle. In particular, the surface may be the surface of a returnable beverage bottle such as a beer bottle.

The composition may be applied as applying a thin coating having a thickness of about 20-50 microns (about 1.1-2.9 grams of dried coating for an average 750ml bottle). This thickness is substantially lower than the thickness of about 150-175 microns (about 14-15 grams for an average 32 ounce bottle) produced in prior art processes.

The coating process is envisioned to be implemented into a bottle production line after annealing in the LEHR and before the cold-end-coating (CEC) is applied. Coating solution will be sprayed onto bottles row by row and the sprayed coatings will be cured thermally online.

To mimic the bottle surface condition, as-received bottles that have CEC coated need to be heat-treated to remove CEC before coating application and test. The bottles are cooled to room temperature. Then bottles are heated to certain temperatures for spraying. Then spraying the bottles with the coating composition is carried out. The method may then include reheating the bottles after the spraying step.

The initial heating step may be at a temperature of about 450°C for about two hours. The second heating step may be between about 100 and 190°C to reach equilibrium temperature and the third heating step may be between about 120 and 170°C for about 10 to 30 minutes to obtain a tacky-free surface.

To achieve strengthening of glass containers, the coating needs to be rigid to hold flaws on the surface. This requires a glassy material. The glass transition of the coating of the invention should be higher than room temperature.

The glass item may be a beverage bottle such as a beer bottle.

The invention is now described, by way of example, with reference to the following three examples.

EXAMPLE 1

A first two-part coating composition was prepared according to Table 1. The composition of the solvent mixture in the formulation is listed in Table 2. Dibutyl tin dilaurate was used as a 1% solution in toluene.

**Table 1**

| Parts | Formulation | (%) Weight |
|---|---|---|
| Part A | Pluracol TP-440 | 30% |
| | Pluracol PEP-450 | 12% |
| | 1 % dibutyl tin dilaurate in toluene | 0.04% |
| | solvent mixture | 12% |
| | 3-aminopropyl trimethoxysilane | 0.73% |
| Part B | Rubinate M | 46% |

Table 2

| solvent mixture | parts |
|---|---|
| isobutyl acetate | 2.1 |
| toluene | 1.3 |
| cellosolve acetate | 7.5 |
| methyl isoamyl ketone | 6.3 |

The composition was prepared by mixing Part A and Part B together right before spraying. Spraying of bottles was completed within 15 minutes to obtain consistent coatings between bottles.

Returnable bottles of 750 ml were heat-treated at 450°C for 2 hr and allowed to cool naturally. The heat treatment removed the cold-end-coating (CEC) of the bottles. The bottles were then preheated to 120°C and brought to a rotating stage one by one for spraying. Only the sidewalls were covered with the coating. After spraying, the coated bottles were transferred into an oven at 120°C and cured for 15 minutes to obtain a tacky-free surface. The coating weight after curing was 2.2 grams per bottle. The bottles were then tested for burst pressure, tilt angle, and line simulation properties.

The coating resulted in a 52% improvement on the strength of the bottles on the low end (increase of the burst pressure at a cumulative probability of failure at 0.8%, F=0.8%) comparing to the control bottles (bottles with cold-end-coating removed). It also resulted in 47% improvement on the average burst pressure, which had P<0.001.

The coating had a tilt angle of 48° and it reduced to 18° after application of a lubricious coating Tegoglas 3000+. The test with T3000+ was carried out when T3000+ solution was dry on the bottles. In the line simulation test, bottles were coated with T3000+ before every 5 minutes of test. After 120 minutes of test, there were no scratches at contact lines between bottles.

EXAMPLE 2

A second two-part coating composition was prepared according to Table 3. The solvent mixture was the same as that in Example 1, and the bottles were coated as described in Example 1. The average coating weight after curing was 2 gram per 750 ml bottle.

Table 3

| Parts | Formulation | (%) Weight |
|---|---|---|
| Part A | Pluracol TP-440 | 28% |
| | Pluracol PEP-450 | 11% |
| | 1 % dibutyl tin dilaurate in toluene | 0.04% |
| | solvent mixture | 14% |
| | 3-aminopropyl trimethoxysilane | 3% |
| | BYK325 | 0.5% |
| | BYK370 | 0.5% |
| Part B | Rubinate M | 43% |
| | Total | 100% |

The caustic resistance of the coatings was tested. The coating stayed intact during 8 hours of caustic immersion at 80°C and remained 5A adhesion with X-cut adhesion test after the immersion.

Three coated bottles were tested for tilt angle. The angle was found to be 21 °. Line simulation tests were carried out on three coated bottles without applying the lubricious coating Tegoglas 3000+. The center one did not have any scratches created up to 80 minutes of continuous line simulation test.

The coating resulted in 19% improvement of strength on the low end (increase of the burst pressure at a cumulative probability of failure at 0.8%) compared to the control bottles (bottles with cold-end-coating removed). It also resulted in a 38% improvement on the average burst pressure (P<0.001).

EXAMPLE 3

The same formulation as described in Example 2 was applied to 750 ml returnable bottles. The coatings were sprayed both to the sidewalls and to the bottoms. In the spraying process, a bottle was inverted on a preheated stand and the whole assembly was placed on the rotation stage. The bottle bottom was sprayed first and then the body was sprayed. The bottles were then brought into the curing oven with the stands. The curing process was the same as described in Example 2. After curing, an average of 2.2 grams of coatings per bottle was achieved.

The coated bottles with both sidewall and bottom coverage had 68% improvement of strength on the low end (increase of the burst pressure at a cumulative probability of failure at 0.8%) compared to the control bottles (bottles with cold-end-coating removed). It also resulted in a 54% improvement on the average burst pressure (P<0.001).

EXAMPLE 4

A fourth two-part coating composition was prepared according to Table 4. Melamine CYMEL 303 and a catalyst CYCAT 4040 were added to the polyol part for further crosslinking in the coating. The composition of the solvent mixture in the formulation is listed in Table 2.

Table 4

| Parts | Formulation | (%) Weight |
|---|---|---|
| PartA | Pluracol TP-440 | 26% |
| | Pluracol PEP-450 | 10% |
| | 1% dibutyl tin dilaurate in toluene | 0.04% |
| | solvent mixture | 13% |
| | 3-aminopropyl trimethoxysilane | 3% |
| | Acetone | 7% |
| | BYK325 | 0.5% |
| | BYK370 | 0.5% |
| | CYMEL 303 | 9% |
| | CyCAT4040 | 0.2% |
| Part B | Rubinate M | 31% |
| | Total | 100% |

The composition was prepared by mixing Part A and Part B together right before spraying.

Returnable bottles were heat-treated to remove their cold-end-coatings as described in Example 1. The bottles were then preheated to 100°C and brought to a rotating stage one by one for spraying. Only the sidewalls were covered with the coating. After spraying, the coated bottles were transferred into an oven at 150°C and cured for 20 minutes to obtain a tacky-free surface. After curing, the average coating weight was 2 grams per bottle.

The coating resulted in 90% improvement on the strength of the bottles on the low end (increase of the burst pressure at a cumulative probability of failure at 0.8%, F=0,8%) comparing to control bottles (bottles with cold-end-coating removed). It also resulted in 37% improvement on the average burst pressure, which had P=0.002.

Three coated bottles were tested for tilt angle. The angle was found to be 11°. Line simulation tests were carried out on three coated bottles without applying the lubricious coating Tegoglas 3000+. The center one did not have any scratches created up to 80 minutes of continuous line simulation test.

The caustic resistance of the coatings was tested. The coating stayed intact during 8 hours of caustic immersion at 80°C and remained 5A adhesion with X-cut adhesion test after the immersion.

TESTING

CAUSTIC IMMERSION TEST

Coated bottles were tested with caustic solution at 80°C for 8 hrs. The caustic solution consisted of 2% (w/v) sodium hydroxide, 0.5% (w/v) sodium carbonate, and 0.3% (v/v) Stabilon SF (Ecolab). Stabilon SF is a surfactant solution used in cleaning bottles in deionised water. The coated bottles were immersed in a caustic tank. The bottles were examined at intervals to determine the adhesion of the coatings to the bottles and the formation of defects such as blisters, delamination or haziness. An X-cut test (modified from an ASTM method D3359-02) was applied to determine the adhesion.

An X-cut was created on the bottle surface at about 40 mm (1.5 in.) long that intersected near their middle with a smaller angle of between 30 and 45°. A piece of adhesive was applied on the top of the X-cut. The tape was smoothed into place by finger in the area of the incisions and then rubbed firmly with the eraser on the end of a pencil. Within 90 +/- 30 seconds of application, the tape was removed by seizing the free end and pulling it off rapidly (not jerked) back upon itself at an angle as close to 180° as possible. The X-cut area was inspected for removal of coating from the substrate or previous coating and rate the adhesion in accordance with the following scale:

5A No peeling or removal,

4A Trace peeling or removal along incisions or at their intersection,

3A Jagged removal along incisions up to 1.6 mm on either side,

2A Jagged removal along most of incisions up to 3.2 mm on either side,

1 A Removal from most of the area of the X under the tape, and

0A Removal beyond the area of the X.

## BURST PRESSURE TEST

Coated bottles were tested with an AGR ramp pressure tester to determine burst pressure. The test was carried out according to ASTM C-147 Method B. Application of internal pressure increasing at a predetermined rate and the burst pressure corrected to 1 minute load was reported. In some formulations, coated bottles did not break even after three times of burst pressure test due to the limited maximum burst pressure provided by the tester. In these cases, the highest burst pressure applied was used for data analysis for that bottle. In each formulation, 12 bottles were tested. The burst pressure of 50 CEC-removed bottles was used as controls.

The burst pressure data were analyzed with a Weibull function, where the probability of failure F is a function of Weibull shape factor m and Weibull scale $\sigma_0$.

$$F = 1 - \exp[-(\sigma / \sigma_0)^m]$$

In a linear form, the equation becomes

$$\ln[\ln(1/(1 - F))] = m\ln\sigma - m\ln\sigma_0$$

The data obtained were fitted according to this relationship to obtain m and $\sigma_0$. From the fitting, the burst pressure of bottles at 0.8% cumulative probability of failure (F=0.8%) was calculated.

$$\sigma_{F=0.8\%} = 0.00803^{1/m} \sigma_0$$

This burst pressure represented the strength of weak bottles and is used as a major parameter to determine how effectively a coating can strengthen bottles from the low end of their strength distribution. P-value analysis was also implemented to determine the strengthening effect of coatings based on the average burst pressure. The protocol used was a t-student test that determined the difference between the means of coated bottles and control bottles. The control bottles were the as-received bottles with their cold-end-coating removed. Typically, when $P < 0.05$, the strengthening was considered significant.

## TILT ANGLE AND LINE SIMULATION

Coated bottles were tested with a tilt angle tester and an AGR line simulation tester. Three bottles were stacked with two at the bottom and one on top. The plate on which the two bottom bottles were positioned was raised at a given speed and stopped when the top bottles started to slide down. The angle at which the plate was raised was recorded as the tilt angle.

In the line simulation test, the simulator was adjusted according to the center of gravity of 750 ml bottles. The gate was adjusted to allow 50% slip rate when the bottles rotated. Water was sprayed onto the bottles during the test. Three bottles for each type of coatings were used and the condition of the center bottle was reported after a certain duration of test. When a lubricious coating Tegoglas 3000+ was used, the bottles were dipped into 3% T3000+ solution at room temperature before every 5-minute test and put back to the line simulation tester.

The invention provides polyurethane coating systems which strengthen and lightweight returnable bottles and which allow multiple recycling of returnable bottles. The invention can also be applied to lightweight non-returnable bottles. Furthermore, the invention provides a coating system which results in the strengthening of glass rather than the shatter-proofing of the glass.

**Claims**

1. A glass item which has a single layer of a strengthening coating composition which increases the burst pressure of the item, the coating composition having a thickness of between 20 and 50 microns, the composition being produced by combining
   a polyol component;
   an isocyanate component; and
   a silane adhesion promoter, the silane adhesion promoter comprising less than about 15% of the composition.

2. A glass item as claimed in claim 1, in which the silane adhesion promotor comprises less than 10% (w/w) of the composition.

3. A glass item as claimed in claim 1 or claim 2, in which the silane adhesion promoter comprises between 0,7% and 3% (w/w) of the composition.

4. A glass item as claimed in any one of the preceding claims, in which the polyol component is selected from polyether polyols, polyester polyols and polyacrylate polyols.

5. A glass item as claimed in claim 4, in which the polyol component is a combination of tri-functional polyols and tetra-functional polyols.

6. A glass item as claimed in any one of the preceding claims, in which the isocyanate component is selected from polymeric isocyanates and isocyanate prepolymers.

7. A glass item as claimed in claim 6, in which the polymeric isocyanates are derived from methylenediphenyldiisocyanate (MDI).

8. A glass item as claimed in any one of the preceding claims, in which the silane adhesion promoter is selected from amino functional silanes, isocyanate functional silanes, mercapto functional silanes, epoxy functional silanes, bis-hydroxy functional silanes and mixtures thereof.

9. A glass item as claimed in claim 8, in which the silane adhesion promoter is selected from 3-aminopropyltriethoxysilane, 3-isocyanatopropyltriethoxysilane, bis(2-hydroxyethyl)-3-aminopropyltriethoxysilane, (3-triethoxysilylpropy)-t-butylcarbamate, triethoxysilylpropylethylcarbamate, 3-mercaptopropyltrimethoxysilane, (3,4-epoxycyclohexyl)ethyltrimethoxysilane, (3-glycidopropyl)trimethoxysilane, (3-glycidopropyl)triethoxysilane and combinations of any two or more thereof.

10. A glass item as claimed in any one of the preceding claims which includes combining a melamine crosslinking agent and a catalyst for the melamine reaction with the polyol component, the isocyanate component and the silane adhesion promoter

11. A glass item as claimed in any one of the preceding claims, which includes combining a polymerising catalyst with the polyol component, the isocyanate component and the silane adhesion promoter.

12. A glass item as claimed in claim 11, in which the polymerising catalyst is selected from salts of metals selected from tin, zinc, zirconium and bismuth and compounds containing tertiary amino groups.

13. A glass item as claimed in claim 12, in which the polymerising catalyst is dibutyltin dilaurate.

14. A glass item as claimed in any one of the preceding claims, which includes combining one or more of a wetting agent and a surface slip agent with the polyol component, the isocyanate component and the silane adhesion promoter.

15. A glass item as claimed in any one of claims 1 to 14 inclusive, which includes combining the polyol component, the polyisocyanate component and the silane adhesion component with a solvent.

16. A glass item as claimed in any one of claims 1 to 15 inclusive, in which the molar ratio between the polyol component and the isocyanate component in the coating composition is between 1,3 - 0,9.

17. A glass item as claimed in claim 15 or claim 16, in which the percentage of the solvent in the composition is between about 0 and 30% (w/w) of the composition.

18. A glass item as claimed in any one of claims 14 to 17, in which the concentration range of the wetting agent is between 0, 01 and 2% (w/w) of the composition.

19. A glass item as claimed in any one of claims 14 to 18 inclusive, in which the concentration range of the surface slip agent in the composition is between 0,05 and 7% (w/w).

20. A glass item as claimed in any one of the preceding claims which is a glass bottle.

**Patentansprüche**

1. Glaselement, das eine einzelne Schicht aus einer verstärkenden Beschichtungszusammensetzung aufweist, die den Berstdruck des Elements erhöht, wobei die Beschichtungszusammensetzung eine Dicke zwischen 20 und 50 Mikrometern aufweist und die Zusammensetzung hergestellt ist durch Kombinieren
einer Polyolkomponente;
einer Isocyanatkomponente; und
eines Silan-Haftvermittlers, wobei der Silan-Haftvermittler weniger als etwa 15 % der Zusammensetzung umfasst.

2. Glaselement nach Anspruch 1, wobei der Silan-Haftvermittler weniger als 10 Gew.-% (w/w) der Zusammensetzung umfasst.

3. Glaselement nach Anspruch 1 oder 2, wobei der Silan-Haftvermittler zwischen 0,7 Gew.-% und 3 Gew.-% (w/w) der Zusammensetzung umfasst.

4. Glaselement nach einem der vorhergehenden Ansprüche, wobei die Polyolkomponente aus Polyetherpolyolen, Polyesterpolyolen und Polyacrylatpolyolen ausgewählt ist.

5. Glaselement nach Anspruch 4, wobei die Polyolkomponente eine Kombination von trifunktionellen Polyolen und tetrafunktionellen Polyolen ist.

6. Glaselement nach einem der vorhergehenden Ansprüche, wobei die Isocyanatkomponente aus polymeren Isocyanaten und Isocyanat-Vorpolymeren ausgewählt ist.

7. Glasgelement nach Anspruch 6, wobei die polymeren Isocyanate von Methylendiphenyldiisocyanat (MDI) abgeleitet sind.

8. Glaselement nach einem der vorhergehenden Ansprüche, wobei der Silan-Haftvermittler aus aminofunktionellen Silanen, isocyanatfunktionellen Silanen, mercaptofunktionellen Silanen, epoxyfunktionellen Silanen, bishydroxyfunktionellen Silanen und Gemischen davon ausgewählt ist.

9. Glaselement nach Anspruch 8, wobei der Silan-Haftvermittler aus 3-Aminopropyltriethoxysilan, 3-Isocyanatopropyltriethoxysilan, Bis(2-hydroxyethyl)-3-aminopropyltriethoxysilan, (3-Triethoxysilylpropyl)-t-butylcarbamat, Triethoxysilylpropylethylcarbamat, 3-Mercaptopropyltrimethoxysilan, (3,4-Epoxycyclohexylethyltrimethoxysilan, (3-Glycidopropyl)trimethoxysilan, (3- Glycidopropyl)triethoxysilan und Kombinationen von beliebigen zwei oder mehr davon ausgewählt ist.

10. Glaselement nach einem der vorhergehenden Ansprüche, in welches das Zusammengeben eines Melamin-Vernetzungsmittels und eines Katalysators für die Melaminreaktion mit der Polyolkomponente, der Isocyanatkomponente und dem Silan-Haftvermittler einbezogen ist.

11. Glaselement nach einem der vorhergehenden Ansprüche, in welches das Zusammengeben eines polymerisierenden Katalysators mit der Polyolkomponente, der Isocyanatkomponente und dem Silan-Haftvermittler einbezogen ist.

12. Glaselement nach Anspruch 11, wobei der polymerisierende Katalysator aus Salzen von Metallen, ausgewählt aus Zinn, Zink, Zirkonium und Bismut, und Verbindungen, die tertiäre Aminogruppen enthalten, ausgewählt ist.

**13.** Glaselement nach Anspruch 12, wobei der polymerisierende Katalysator Dibutylzinndilaurat ist.

**14.** Glaselement nach einem der vorhergehenden Ansprüche, in welches das Zusammengeben eines oder mehrerer von einem Benetzungsmittel und einem Oberflächengleitmittel mit der Polyolkomponente, der Isocyanatkomponente und dem Silan-Haftvermittler einbezogen ist.

**15.** Glaselement nach einem der vorhergehenden Ansprüche 1 bis 14, in welches das Zusammengeben der Polyolkomponente, der Polyisocyanatkomponente und der Silan-Haftkomponente mit einem Lösemittel einbezogen ist.

**16.** Glaselement nach einem der vorhergehenden Ansprüche 1 bis 15, wobei das Molverhältnis zwischen der Polyolkomponente und der Isocyanatkomponente in der Beschichtungszusammensetzung 1,3 bis 0,9 beträgt.

**17.** Glaselement nach Anspruch 15 oder 16, wobei der prozentuale Anteil des Lösemittels in der Zusammensetzung zwischen etwa 0 und 30 Gew.-% der Zusammensetzung beträgt.

**18.** Glaselement nach einem von Anspruch 14 bis 17, wobei der Konzentrationsbereich des Benetzungsmittels zwischen 0,01 und 2 Gew.-% der Zusammensetzung beträgt.

**19.** Glaselement nach einem der Ansprüche 14 bis 18, wobei der Konzentrationsbereich des Oberflächengleitmittels in der Zusammensetzung zwischen 0,05 und 7 Gew.-% beträgt.

**20.** Glaselement nach einem der vorhergehenden Ansprüche, welches eine Glasflasche ist.


**Revendications**

**1.** Article en verre qui a une couche unique d'une composition de revêtement fortifiant qui augmente la pression de rupture de l'article, la composition de revêtement ayant une épaisseur entre 20 et 50 microns, la composition étant produite en combinant

un composant polyol ;

un composant isocyanate ; et

un promoteur d'adhérence au silane, le promoteur d'adhérence au silane constituant moins d'environ 15 % de la composition.

**2.** Article en verre selon la revendication 1, dans lequel le promoteur d'adhérence au silane comprend moins de 10 % (M/M) de la composition.

**3.** Article en verre selon la revendication 1 ou la revendication 2, dans lequel le promoteur d'adhérence au silane comprend entre 0,7 % et 3 % (M/M) de la composition.

**4.** Article en verre selon n'importe laquelle des revendications précédentes, dans lequel le composant polyol est sélectionné à partir de polyols de polyéther, de polyols de polyester et de polyols de polyacrylate.

**5.** Article en verre selon la revendication 4, dans lequel le composant polyol est une combinaison de polyols trifonctionnels et de polyols tétrafonctionnels.

**6.** Article en verre selon n'importe laquelle des revendications précédentes, dans lequel le composant isocyanate est sélectionné à partir d'isocyanates polymères et de prépolymères d'isocyanate.

**7.** Article en verre selon la revendication 6, dans lequel les isocyanates polymères sont obtenus à partir de méthylènediphényldiisocyanate (MDI).

**8.** Article en verre selon n'importe laquelle des revendications précédentes, dans lequel le promoteur d'adhérence au silane est sélectionné à partir de silanes amino-fonctionnels, de silanes à isocyanate fonctionnel, de silanes à mercapto fonctionnel, de silanes à époxy fonctionnel, de silanes à bis-hydroxy fonctionnel et de mélanges de ceux-ci.

**9.** Article en verre selon la revendication 8, dans lequel le promoteur d'adhérence au silane est sélectionné à partir de 3-aminopropyltriéthoxysilane, 3-isocyanatopropyltriéthoxysilane, bis(2-hydroxyéthyl)-3-aminopropyltriéthoxysilane, (3-triéthoxysilylpropyl)-t-butylcarbamate, triéthoxysilylpropyléthylcarbamate, 3-mercaptopropyltriméthoxysilane, (3,4-époxycyclohexyl)éthyltriméthoxysilane, (3-glycidopropyl)triméthoxysilane, (3-glycidopropyl)triéthoxysilane et des combinaisons de deux quelconques ou plus de ceux-ci.

10. Article en verre selon n'importe laquelle des revendications précédentes qui inclut la combinaison d'un agent de réticulation à la mélamine et d'un catalyseur pour la réaction de la mélamine avec le composant polyol, le composant isocyanate et le promoteur d'adhérence au silane

11. Article en verre selon n'importe laquelle des revendications précédentes, qui inclut la combinaison d'un catalyseur de polymérisation avec le composant polyol, le composant isocyanate et le promoteur d'adhérence au silane.

12. Article en verre selon la revendication 11, dans lequel le catalyseur de polymérisation est sélectionné à partir de sels de métaux sélectionnés parmi l'étain, le zinc, le zirconium et le bismuth et de composés contenant des groupes amino tertiaires.

13. Article en verre selon la revendication 12, dans lequel le catalyseur de polymérisation est du dilaurate de dibutylétain.

14. Article en verre selon n'importe laquelle des revendications précédentes, qui inclut la combinaison d'un ou plusieurs d'un agent mouillant et d'un agent de glissance d'une surface avec le composant polyol, le composant isocyanate et le promoteur d'adhérence au silane.

15. Article en verre selon n'importe laquelle des revendications 1 à 14 incluses, qui inclut la combinaison du composant polyol, du composant polyisocyanate et du composant d'adhérence au silane avec un solvant.

16. Article en verre selon n'importe laquelle des revendications 1 à 15 incluses, dans lequel le rapport molaire entre le composant polyol et le composant isocyanate dans la composition de revêtement est entre 1,3 et 0,9.

17. Article en verre selon la revendication 15 ou la revendication 16, dans lequel le pourcentage du solvant dans la composition est entre environ 0 et 30 % (M/M) de la composition.

18. Article en verre selon n'importe laquelle des revendications 14 à 17, dans lequel la plage de concentrations de l'agent mouillant est entre 0, 01 et 2 % (M/M) de la composition.

19. Article en verre selon n'importe laquelle des revendications 14 à 18 incluses, dans lequel la plage de concentrations de l'agent de glissance d'une surface dans la composition est entre 0,05 et 7 % (M/M).

20. Article en verre selon n'importe laquelle des revendications précédentes qui est une bouteille en verre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4891241 A
- US 6013333 A
- US 5567235 A
- US 4093758 A
- US 4053076 A
- EP 025992 A
- US 5837795 A
- US 4093759 A
- EP 25992 A
- JP 2002347770 B
- JP 2002059932 A

### Non-patent literature cited in the description

- Resin coated ultra-light weight returnable bottle. *International Glass Review,* 2002